# EUROPEAN PATENT APPLICATION

(11) **EP 1 842 589 A1**
(43) Date of publication of application: **10.10.2007**
(21) Application number: 07105566.9
(22) Date of filing: 03.04.2007
(51) Int. Cl.: B01J 27/22, H01M 4/90, H01M 4/92, H01M 8/10

(54) **Nanoporous tungsten carbide catalyst and preparation method thereof**

(30) Priority: 04.04.2006 KR 20060030507
(71) Applicant: Postech Foundation, Pohang-City, Kyungsangbuk-do 790-784 (KR); Postech Academy-Industry Foundation, Pohang-city, Kyungsangbuk-do 790-784 (KR)
(72) Inventor: Lee, Jae Sung, 790-784 (KR); Jung, Mooyoung, 790-784 (KR); Raman, Ganesan, 790-784 (KR); Kim, Youngkwon, 790-784 (KR)
(74) Representative: Poulin, Gérard

(57) **Abstract**

Provided are a nanoporous tungsten carbide catalyst that can be used as an electrode of a fuel cell and a preparation method thereof. The nanoporous tungsten carbide catalyst includes tungsten carbide crystalline particles and has nanopores of a mean pore diameter ranging from 2 nm to 5 nm and a nanopore volume of 0.08 to 0.25 cm³ per gram of the catalyst. The nanoporous tungsten carbide catalyst or the nanoporous tungsten carbide catalyst supported with a metallic active component has high electrochemical activity and enhanced resistance to poisoning by carbon monoxide (CO).

Are also provided an electrode and a fuel cell comprising said nanoporous tungsten carbide catalyst.

## Description

### CROSS-REFERENCE TO RELATED PATENT APPLICATION

This application claims the benefit of Korean Patent Application No. 10-2006-0030507, filed on April 4, 2006, in the Korean Intellectual Property Office, the disclosure of which is incorporated herein in its entirety by reference.

### BACKGROUND OF THE INVENTION

### 1. Field of the Invention

The present invention relates to a nanoporous tungsten carbide catalyst and a preparation method thereof, and more particularly, to a nanoporous tungsten carbide catalyst having high electrochemical activity and enhanced resistance to poisoning by carbon monoxide (CO), and a preparation method thereof. Accordingly, even after use for an extended period of time, the nanoporous tungsten carbide catalyst of the present invention can maintain a long-term high catalytic activity with a reduced amount of a metallic active component compared to a precious metal catalyst.

### 2. Description of the Related Art

A fuel cell is an energy-conversion device that directly converts energy produced through an electrochemical reaction of a fuel (e.g., hydrogen, natural gas, coal, petroleum, or landfill gas) and an oxidizing agent (e.g., oxygen, or air) into electric energy. Since fuel cells were developed and used as principal power sources of spacecrafts along with the 1960's space program in the U.S.A., active research into fuel cells has been conducted in many countries worldwide with the hope of applying them to a wide variety of fields such as electricity generation systems, household appliances, transportation, portable power sources for mobile equipment, and so on. Fuel cells have superb advantages such as an energy conversion efficiency of about 90%, which is noticeably higher than that of conventional technologies. In addition, the fuel cell is an advantageously nonpolluting electricity generation device which does not produce nitrogen oxide (NOₓ) and sulfur oxide (SOₓ).

In a fuel cell, hydrogen or fuel is supplied to an anode and oxygen is supplied to a cathode to cause an electrochemical reaction between the anode and the cathode, thereby generating electrical energy. An oxidation reaction of hydrogen or organic materials takes place at the anode and a reduction reaction of oxygen takes place at the cathode, thereby creating a difference in the electric potential between the anode and the cathode.

There are several types of fuel cells according to the kind of electrolyte used, including: phosphoric acid fuel cells (PAFCs), molten carbonate fuel cells (MCFCs), solid oxide fuel cells (SOFCs), polymer exchange membrane fuel cells (PEMFCs), otherwise known as proton exchange membrane fuel cells, alkaline fuel cells (AFCs), and direct methanol fuel cells (DMFCs).

Whereas the respective fuel cells basically operate under the same principles, the types of fuel cells used and the working temperatures, catalysts and electrolytes thereof differ from one another.

Of these fuel cells, the direct methanol fuel cells (DMFCs) are a relatively new type of fuel cell and have several advantages such as high energy density, low working temperature, easy processability of methanol fuel liquid, and so on, and offer the promise of being applied in portable devices such as small-size communication devices, or notebook computers. In addition, the polymer exchange membrane fuel cells (PEMFCs) have remarkably higher power output, lower operation temperature, quicker startup and faster response than other fuel cells. Further, the PEMFCs are suitably developed for use as power supplies in numerous applications, including portable power devices such as automobiles, distributed power devices such as residential areas or public buildings, and small scale power devices such as electronic devices, and so on.

A cathode and an anode for use in fuel cells are generally fabricated by impregnating a metallic catalyst made of platinum (Pt), a platinum-ruthenium (Ru) alloy, or other active metal alloys, in a carbon mediated support. In particular, since precious metals, e.g., platinum, are expensive and easily poisoned by trace amounts of carbon monoxide, the cathode and anode using a precious metal catalyst are costly and have a short lifespan.

In addition, precious metal catalysts used in electrodes of fuel cells are very expensive and leave no room for price competitiveness even if mass produced. Accordingly, the challenges are the development of cost-effective active materials as substitutes for precious metal catalysts or maximized utilization of a precious metal used as a catalyst through maximization of an effective surface area of the precious metal.

There have been many studies regarding utilization of tungsten carbide as catalysts of electrodes for fuel cells because of their stability with respect to an anodic potential and their tolerance against poisoning from carbon monoxide (CO). Unfortunately, tungsten carbide electrocatalysts, in spite of their high tolerance to poisoning from CO, do not exhibit an acceptable level of electrochemical activity without the additional presence of an expensive co-catalyst.

In this regard, numerous attempts have been made to find and develop methods of synthesizing tungsten carbide to be used as electrocatalysts by improving catalytic activity. There has been reported by the inventors of the present invention a method of utilizing an electrocatalyst in a DMFC or a PEMFC having an increased surface area and a high adsorbing capability and supported with other metallic active components, as disclosed in Korean Patent Application No. 10-2005-0061149.

However, there still exists great demand for further research into tungsten carbide catalysts having improved electrochemical activity and enhanced poison resistance to poisoning from carbon monoxide (CO) and electrode catalysts supported with metallic active components.

### SUMMARY OF THE INVENTION

The present invention provides a nanoporous tungsten carbide catalyst having high electrochemical activity and enhanced resistance to poisoning by carbon monoxide and capable of forming more stabilized single phase crystals, thereby exhibiting high electrochemical activity using a small amount of a supported metal active component.

The present invention also provides a preparation method of the nanoporous tungsten carbide catalyst.

The present invention also provides an electrode of a fuel cell comprising the nanoporous tungsten carbide catalyst.

The present invention also provides a fuel cell comprising the nanoporous tungsten carbide catalyst.

The nanoporous tungsten carbide catalyst, the preparation method thereof, the electrode and the fuel cell comprising said nanoporous tungsten carbide are as defined in the appended independent claims.

Particular embodiments thereof are as defined in the appended dependent claims.

According to an aspect of the present invention, there is provided a nanoporous tungsten carbide catalyst comprising tungsten carbide crystalline particles and having nanopores of a mean pore diameter ranging from 2 nm to 5 nm and a nanopore volume of 0.08 to 0.25 cm³ per gram of the catalyst.

According to another aspect of the present invention, there is provided a method of preparing a nanoporous tungsten carbide catalyst including (a) mixing a solution prepared by dissolving a polymerizable monomer and a tungsten precursor in a solvent with a solution of a surfactant; (b) preparing a tungsten-polymer composite material having a polymer derived from the polymerizable monomer and the tungsten precursor through hydrothermal synthesis; and (c) calcining the tungsten-polymer composite material to produce nanoporous tungsten carbide particles.

According to still another aspect of the present invention, there is provided an electrode of a fuel cell comprising the nanoporous tungsten carbide.

According to a further aspect of the present invention, there is provided a fuel cell including a cathode having a catalyst layer and a diffusion layer, an anode having a catalyst layer and a diffusion layer, and an electrolyte layer disposed between the cathode and the anode, wherein at least one of the cathode and the anode comprises the nanoporous tungsten carbide catalyst.

### BRIEF DESCRIPTION OF THE DRAWINGS

The above and other features and advantages of the present invention will become more apparent by describing in detail exemplary embodiments thereof with reference to the attached drawings in which:
FIG. 1 is a graph showing results of X-ray diffraction on a nanoporous tungsten carbide catalyst prepared in Example 1;
FIG. 2 is a graph depicting the percentage of porosity of the nanoporous tungsten carbide catalyst prepared in Example 1, determined by nitrogen adsorption/desorption isotherms;
FIG. 3 is a high resolution transmission electron microscopy (HRTEM) image of the nanoporous tungsten carbide catalyst prepared in Example 1;
FIG. 4 is a selected area electron diffraction (SAED) image of the nanoporous tungsten carbide catalyst prepared in Example 1;
FIG. 5 is a high resolution transmission electron microscopy (HRTEM) image of a nanoporous tungsten carbide catalyst prepared in Example 3; and
FIG. 6 is a graph showing results of a cyclic voltammetry (CV) test on the nanoporous tungsten carbide catalyst prepared in Example 3 and catalysts prepared in Comparative Examples 2 and 3.

### DETAILED DESCRIPTION OF THE INVENTION

The present invention will now be described more fully with reference to the accompanying drawings, in which exemplary embodiments of the invention are shown. The invention may, however, be embodied in many different forms and should not be construed as being limited to the embodiments set forth herein; rather, these embodiments are provided so that this disclosure will be thorough and complete, and will fully convey the concept of the invention to those skilled in the art.

A tungsten carbide catalyst according to an embodiment of the present invention comprises tungsten carbide crystalline particles and having nanopores of a mean pore diameter ranging from 2 nm to 5 nm and a nanopore volume of 0.08 to 0.25 cm³ per gram of the catalyst. The nanoporous tungsten carbide catalyst can be a catalyst for use in an electrode of a fuel cell. In addition, the nanoporous tungsten carbide catalyst can support the metal active component.

The nanoporous tungsten carbide catalyst according to the current embodiment of the present invention includes fine tungsten carbide crystalline particles. The fine tungsten carbide crystalline particles are mostly in a single phase of WC, and mostly free of W₂C, WC₁₋ₓ, or WO₃ where x is an arbitrary real number between 0 and 1, which varies according to preparation conditions of the catalyst.

In the current embodiment, the tungsten:carbon:oxygen atomic ratio in the overall nanoporous tungsten carbide catalyst is preferably 1:m:n, where 0.4≤m≤1, and 0≤n≤0.1. When m<0.4, there may exist metallic tungsten not combined with carbon. When m>1, there may exist free carbon not combined with tungsten. In both cases, the catalytic activity may deteriorate. In addition, when n>0.1, oxygen atoms do not stay on the surface of the catalyst but are mixed into the catalyst. In this case, the catalytic activity may also deteriorate. When n=0, oxygen atoms do not bind with other components.

In the nanoporous tungsten carbide catalyst of the current embodiment, the tungsten carbide crystalline particles are interconnected by carbon atoms. For example, the tungsten carbide crystalline particles may be injected into a carbon-based template.

In the nanoporous tungsten carbide catalyst according the current embodiment, the tungsten carbide crystalline particles preferably have an average particle size in the range of, but not limited to, 0.01 to 100 µm, more preferably in the range of 0.05 to 50 µm. If the average particle size is smaller than 0.01 µm, the particles tend to easily agglomerate, which is an undesirable catalytic property. If the average particle size is greater than 100 µm, the specific surface area is reduced, resulting in a degradation of catalytic activity.

As stated previously, the nanoporous tungsten carbide catalyst according to the present invention may support a metallic active component such that the metallic active component is supported on the surface of the catalyst. In this case, the overall catalytic activity is further enhanced by the metallic active component supported on the nanoporous tungsten carbide catalyst while maintaining its catalytic activity.

In the present invention, the metallic active component supported on the nanoporous tungsten carbide catalyst is not particularly limited so long as it can serve as a catalyst in oxidation-reduction reactions of an electrode for a fuel cell. In a non-limiting example, such a metal can be at least one selected from the group consisting of platinum (Pt), ruthenium (Ru), osmium (Os), cobalt (Co), palladium (Pd), gallium (Ga), titanium (Ti), vanadium (V), chromium (Cr), manganese (Mn), iron (Fe), nickel (Ni), copper (Cu), zinc (Zn), aluminum (Al), and alloys comprising at least one of these materials.

A preparation method of the nanoporous tungsten carbide catalyst is provided according to another embodiment of the present invention.

The preparation method comprises:
(a) mixing a solution prepared by dissolving a polymerizable monomer and a tungsten precursor in a solvent with a solution of a surfactant (Reactant mixing step);
(b) preparing a tungsten-polymer composite material having a polymer derived from the polymerizable monomer and the tungsten precursor through hydrothermal synthesis (Hydrothermal synthesis step); and
(c) calcinating the tungsten-polymer composite material to produce nanoporous tungsten carbide particles (Calcination step).

Hereinafter, the preparation method of the nanoporous tungsten carbide catalyst according to the current embodiment of the present invention will be described in greater detail.

### (a) Reactant mixing step

In step (a), usable examples of the monomer include, but not limited to, any monomers that can be polymerized in an appropriate temperature range. Some representative examples of such a monomer include resorcinol/formaldehyde, phenol/formaldehyde, pyrrole, thiophene, acronate, and vinyl chloride. The monomer may be polymerized using either an ion polymerization process or a radical polymerization process initiated by an initiator, light or heat, without particular limitation. In particular, in a case of using resorcinol/formaldehyde as the monomer, a copolymer may be formed by dehydration-condensation.

In addition, in step (a), the tungsten precursor is not particularly limited so long as it is a compound comprising tungsten atoms and is capable of providing tungsten atoms through calcination. In particular, tungstate is preferred as the tungsten precursor because it can readily provide tungsten atoms even when the preparation conditions are not overly rigorous. Specific examples of tungstate are, but not limited to, ammonium meta tungstate (AMT), ammonium tungstate, sodium tungstate, tungsten chloride, and mixtures thereof.

In addition, the solvent is preferably a polar solvent. Usable examples of the solvent are, but not limited to, water, and an alcoholic solvent. Examples of the alcoholic solvent are methanol, ethanol, propanol such as isopropyl alcohol, butanol, pentanol, and the like. Particularly, the water is preferably deionized water.

The relative content ratio of the tungsten precursor to the monomer is preferably in the range of 1:5-1:200, in terms of the molar ratio therebetween. If the content of the monomer is below the above range, the shortage gives rise to excess free carbon atoms. If the content of the monomer exceeds the above range, the excess results in generation of carbon-deficient tungsten carbide, which is undesirable.

The relative content ratio of the tungsten precursor to the solvent is preferably in the range of 1:500-1:3000, in terms of the molar ratio therebetween. If the content of the solvent is below the above range, the shortage makes reactant materials difficult to be sufficiently mixed. If the content of the solvent exceeds the above range, the excess gives rise to a slow reaction due to a sharp reduction in the concentration of reactant materials.

In addition, the surfactant used in the surfactant solution may be any one that can produce pores without any limitation. In the present invention, the surfactant increases the degree of dispersion of the tungsten precursor. Further, the surfactant allows finer tungsten-polymer composite particles to be formed from the tungsten precursor and polymers derived from the monomer. The finer particles agglomerate due to high surface energy and internal spaces therebetween and are made bigger due to the surfactant. Finally, pores are produced after the finer particles escape through calcination.

Specific examples of the surfactant are a cationic surfactant such as CH₃(CH₂)ₙ₋₁N(CH₃)₃Br (n=10, 12, 14 or 16), an anionic surfactant such as CH₃(CH₂)ₙ₋₁COOH (n=11, 13 or 15), a neutral surfactant such as CH₃(CH₂)ₙ₋₁NH₂ (n=12 or 16), a non-ionic surfactant such as CH₃(CH₂)₁₅N(PEO)ₙOH (n=2 or 20, and where PEO is polyethylene oxide).

The surfactant solution can be prepared by dissolving the surfactant in a solvent such as water or alcohol, without limitation.

Further, the relative content ratio of the tungsten precursor to the surfactant is preferably in the range of 1:0.5-1:3, in terms of the molar ratio therebetween. If the content of the surfactant is below the above range, the shortage makes it difficult to form a porous material. If the content of the surfactant exceeds the above range, the excess gives rise to generation of macroporous tungsten carbide, which is undesirable.

In an exemplary embodiment of the present invention, the reactant materials, that is, the tungsten precursor, the monomer, the solvent, and the surfactant solution, may be simultaneously mixed. In a preferred embodiment of the present invention, the tungsten precursor, which is a solid, is first dissolved or dispersed in the solvent, and the solution or dispersion is then mixed with the monomer and the surfactant solution, thereby achieving homogenous mixing.

### (b) Hydrothermal synthesis step

In the present invention, hydrothermal synthesis is a reaction for precipitating an inorganic oxide having low solubility using an aqueous solution in supercritical or subcritical conditions. That is to say, a high purity single crystalline oxide having a uniform particle size distribution can be synthesized through the hydrothermal synthesis, which is a simple, single-step reaction.

The hydrothermal synthesis of reaction mixtures is preferably performed at a reaction temperature ranging from about 100°C to 300°C. If the reaction temperature is lower than 100°C, which is lower than the boiling point of water, the hydrothermal reaction may not take place. If the reaction temperature is higher than 300°C, the particle size of the product may be too large. In addition, a suitable reaction time of the hydrothermal synthesis ranges from about 10 to 36 hours. If the reaction time is shorter than 10 hours, the desired reaction product may not be obtained. If the reaction time is longer than 36 hours, the particle size of the product may be too large and the pore structure may be degraded.

As described above, the monomer is polymerized during the hydrothermal synthesis. In order to facilitate polymerization of the monomer during the hydrothermal synthesis, a polymerization initiator may further be included. Examples of the polymerization initiator are, but not limited to, sodium persulfurate, potassium persulfurate, iron chloride, and the like.

The polymer produced by the polymerization of the monomer is in a gel phase in the solvent and the specific weight of the polymer increases as more of the tungsten precursor is included in the polymer, thereby the polymer settles as a precipitated product.

### (c) Calcination step

In this step, the precipitated product prepared in the hydrothermal synthesis step is subjected to calcination in an inert atmosphere by isolating the precipitated product using filtration or other known methods, thereby forming nanoporous tungsten carbide.

Suitable examples of the isolation method of the precipitated product are, without limitation, filtration using filter paper, and the like.

In addition, the inert atmosphere may be any gas which is substantially inert, i.e., does not react or interact with, the catalyst precursor, and suitable examples include, without limitation, nitrogen, argon, and the like.

The calcination may be conducted in any type of heating mechanism, e.g., an oven or a furnace. The calcination is preferably performed at a temperature of between 500 and 1400°C. If the calcination temperature is lower than 500°C, tungsten carbide may not be properly produced. If the calcination temperature is higher than 1400°C, the surface area of tungsten carbide produced may be low due to agglomerates created in the course of the high temperature calcination.

In addition to the calcination, the polymer is carbonized to then be combined with the tungsten precursor. At this time, portions that had been occupied by the uncombined polymer and the surfactant are turned into open spaces in the course of the calcination, thereby forming a nanoporous tungsten carbide catalyst having micropores.

The nanoporous tungsten carbide catalyst prepared using the preparation method according to the current embodiment of the present invention can be used as an electroactive catalyst of a fuel cell as subjection to further treatment is not required.

A nanoporous tungsten carbide catalyst is also provided according to another embodiment of the present invention. The nanoporous tungsten carbide catalyst which serves as a support of the metal component by further comprising supporting other active metal components on surfaces of the particles prepared in step (c). There is no particular limitation on the method of supporting the metal component on the high surface area tungsten carbide catalyst and there may be employed a method of supporting a precious metal catalyst on a general catalyst support, e.g., silica (SiO₂) support.

An electrode of a fuel cell comprising the nanoporous tungsten carbide is provided according to another embodiment of the present invention.

The electrode may be fabricated by a method well known in the art, without any limitation. Non-limiting examples of the fabrication method of the electrode will now be described in detail.

The nanoporous tungsten carbide catalyst of the present invention and a binder are dispersed in a solvent to prepare a slurry. Usable examples of the binder are polyvinyl alcohol, phenolic resin, polytetrafluoroethylene (PTFE), polyvinylidene difluoride-hexafluoropropylene copolymer (PVDF-HFP), cellulose acetate, and the like. Usable examples of the solvent are water, alcohol (methanol, ethanol, isopropyl alcohol, n-propylalcohol, or butylalcohol), dimethylacetamide (DMAc), dimethylformamide, dimethylsulfoxide (DMSO), N-methylpyrrolidone, tetrahydrofuran, and the like. The thus-prepared slurry is coated on the electrode support and dried. The coating process may be carried out using screen printing, spray coating, coating using a doctor blade, gravure coating, dip coating, a silk screen method, painting, and the like, depending on the viscosity of the composition, but is not limited thereto.

The electrode of the present invention is formed of, for example, carbon paper, preferably carbon paper that had previously been subjected to a water-repelling treatment, more preferably carbon paper or carbon cloth having a carbon black layer with water-repelling treatment. The electrode base not only supports the electrode of a fuel cell but also serves as a gas diffusing layer to allow reactant gases to easily access to a catalyst layer by diffusing the reactant gases into the catalyst layer.

The electrode base may further include a microporous layer between the gas diffusion layer and the catalyst layer to further enhance the gas diffusion effect. The microporous layer may be formed by applying a composition including a conducting material, a binder, and if necessary, an ionomer. The conducting material may be carbon powder, carbon black, activated carbon or acetylene black.

A fuel cell is provided according to another embodiment of the present invention. The fuel cell includes a cathode having a catalyst layer and a diffusion layer, an anode having a catalyst layer and a diffusion layer, and an electrolyte layer disposed between the cathode and the anode, wherein at least one of the cathode and the anode comprises the nanoporous tungsten carbide catalyst.

The fuel cell of the present invention may be a phosphoric acid fuel cell (PAFC), a polymer electrolyte membrane fuel cell (PEMFC), or a direct methanol fuel cell (DMFC). In particular, the present invention can be advantageously applied to the direct methanol fuel cell (DMFC). Since the DMFC is fabricated by well-known methods described in numerous publications, a detailed description thereabout will be omitted.

The present invention is further described in the following examples. These examples are provided to illustrate the invention only and are not to be construed as limiting the scope of the present invention in any way.

### EXAMPLES

### Example 1

To prepare an aqueous solution, cetyltrimethylammonium bromide (CTABr) as a surfactant was dissolved in water. In addition, 5 g of ammonium meta tungstate was dissolved in water, and then the solution was transferred to a mixed solution of 1.2 g of resorcinol and 1.8 mL formaldehyde while being stirred to provide homogenous dispersion.

The resultant solution was loaded in a highpressure reactor, followed by being subjected to hydrothermal synthesis at 150°C for 2 days, giving a reaction solid. The reaction solid was filtered and dried at 110°C for one day. The dried reaction product was heated in an inert gas atmosphere at 900°C for one hour and then further heated in a hydrogen atmosphere for 2 hours, thereby preparing a tungsten carbide catalyst.

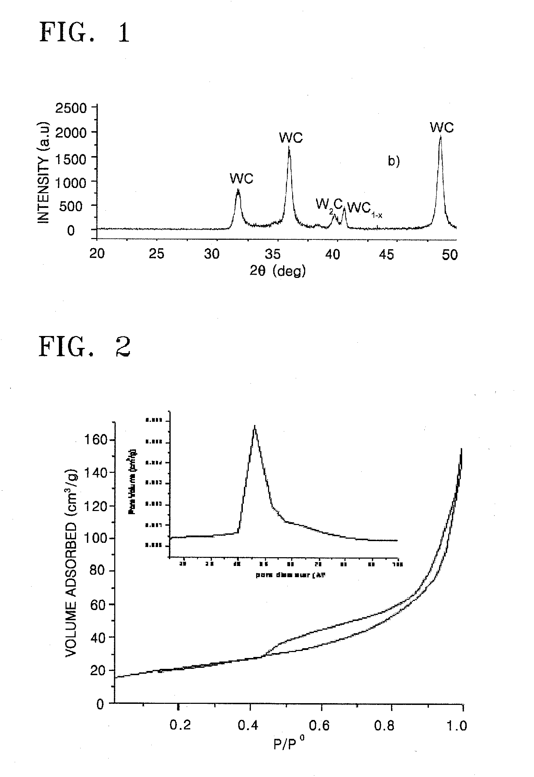

X-ray diffraction (XRD) analysis of the thus prepared tungsten carbide catalyst was carried out using CM-200 model manufactured by Philips operated at 200 kV. As shown in FIG. 1, the XRD analysis result showed that the tungsten carbide catalyst of the present invention was mostly in a single phase of WC. While small amounts of W₂C and WC₁₋ₓ phases were observed, no phase of WO₃ was observed.

Adsorption isotherm analysis of the tungsten carbide catalyst was carried out using an ASAP 2010 manufactured by Micrometritics Instrument Corp. The adsorption isotherm analysis result showed that the tungsten carbide catalyst had micropores as shown in the external graph of FIG. 2. The pore size distribution observation result showed that the tungsten carbide catalyst had mesopore sizes as shown in the internal graph of FIG. 2 and a mean pore diameter of about 2 to 5 nm. A pore volume of the tungsten carbide catalyst was determined to be about 0.24 cm³ per 1 g.

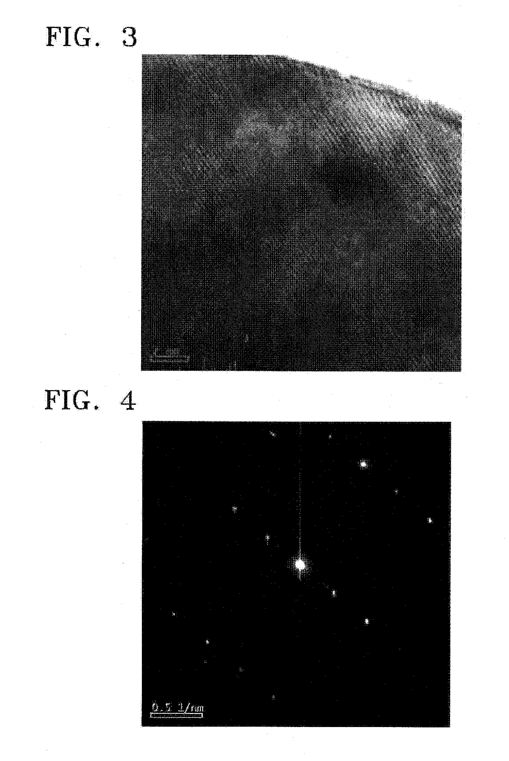

For a more accurate analysis, a high resolution transmission electron microscopy (HRTEM) observation was carried out on the tungsten carbide catalyst using a TEM (model No. JEM 2010) manufactured by Jeol, Japan. The observation result demonstrated that the porous tungsten carbide based on the hydrothermal synthesis had agglomerates of nanoporous tungsten carbide trapped in a carbon-rich shell as shown in FIG. 3. The HRTEM image shown in FIG. 3 clearly shows that hexagonal nanoparticles of tungsten carbide having lattice fringes of about 0.25 nm, which is substantially the same as the inter-particle distance of a hexagonal (100) lattice plane.

Selected area electron diffraction (SAED) analysis carried out using a JEOL JEM 2010 model showed increased crystallinity in the nanoporous tungsten carbide as shown in FIG. 4.

To determine carbon monoxide (CO) poison resistance of the tungsten carbide, the maximum immersion quantity of CO was measured by temperature programmed desorption (TPD). The TPD is performed by adsorbing a material into a surface of an absorbent to calculate the amount of the material desorbed from the absorbent with elevating temperatures in a predetermined variation range. Since desorption temperatures of the absorbed material are known through the TPD analysis, it is possible to determine whether the absorbed material was adsorbed into the absorbent by chemical adsorption or physical adsorption. In addition, data of the binding energy between the absorbed material and the absorbent is also obtainable from the TPD analysis. In this example, the TPD analysis was carried out using a Hewlett Packard 6890 GC coupled with a HP 5973 mass selective detector. The TPD result showed that the maximum immersion quantity of CO was about 106 µmol/g, corresponding to about 10% of total tungsten atoms contained in the tungsten carbide.

### Example 2

0.29 g of NaOH was dissolved in 25 mL distilled water, 0.64 g of NaBH₄ was further dissolved in the solution, and 0.6 g of the porous tungsten carbide catalyst prepared in Example 1 was added to the resultant solution, then the solution was stirred well to provide good dispersion. Thereafter, 1 mL of H₂PtCl₆ was further added to the resultant dispersion and stirred for about 30 minutes, then the solution was centrifuged and dried, thereby preparing a 7.5% platinum (Pt)-tungsten carbide catalyst.

The prepared Pt/tungsten carbide catalyst was evaluated by nitrogen adsorption/desorption isotherms, high resolution transmission electron microscopy (HRTEM), and selected area electron diffraction (SAED) analysis.

The analyzed results showed that the Pt-supported catalyst was substantially the same as the tungsten carbide catalyst prepared in Example 1.

### Example 3

A Pt/tungsten carbide catalyst was prepared using the same method as in Example 2, except that 0.47 mL, instead of 1 mL, of H₂PtCl₆ was added to the solution.

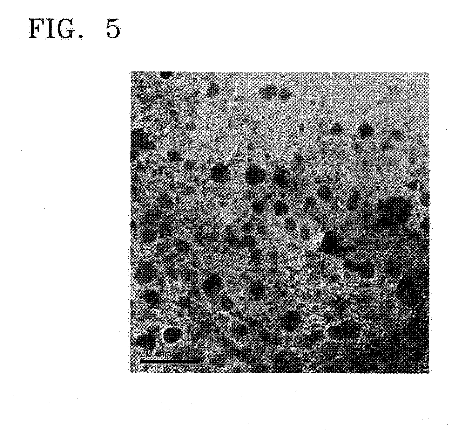

FIG. 5 is a high resolution transmission electron microscopy (HRTEM) image of the nanoporous Pt/tungsten carbide catalyst prepared in Example 3 according to an embodiment of the present invention. As shown in FIG. 5, Pt particles supported on the nanoporous Pt/tungsten carbide catalyst are well dispersed therein, and the average particle size thereof is about 2 nm.

### Comparative Example 1

2.4 g of ammonium meta tungstate was dissolved in water in the absence of a surfactant, and then the solution was transferred to a mixed solution of 1.2 g of resorcinol and 1.8 mL formaldehyde while being stirred to provide homogenous dispersion.

The stirred mixture was placed in a reaction vessel and allowed to stand undisturbed when the temperature was kept at about 94°C for 24 hours until the reaction took place.

After with the lapse of 24 hours, a gel-phase tungsten precursor-polymer composite was precipitated. The precipitated product was filtered and subjected to calcination in an inert atmosphere at about 900°C for 3 hours, thereby a spherical tungsten carbide catalyst was obtained.

### Comparative Example 2

A tungsten carbide catalyst was prepared by the same method as in Example 2, except that 0.6 g of the spherical tungsten carbide catalyst prepared in Comparative Example 1 was used, instead of 0.6 g of the nanoporous tungsten carbide catalyst prepared in Example 1.

### Comparative Example 3

A 20% Pt-Ru/carbon black catalyst, which is commercially available in the trade name of Vulcan-XC 72R by E-TEK, was used for this example.

The catalysts prepared in Examples 2 and 3 and Comparative Examples 2 and 3 were applied to electrochemical oxidations of methanol. First, the specific activity and mass activity of each catalyst were analyzed by performing cyclic voltammetry based on hydrogen adsorption/desorption. For cyclic voltammetry analysis, a Pt-supported electrode was prepared by dispersing well a catalyst-supported platinum (Pt) in 1mL distilled water and 10 µl of 5 wt% Nafion solution as a working electrode for electrochemical assay. The dispersing was performed by sonication for 15 minutes. A quantity of known weight of suspension was added to glassy carbon and dried slowly for evaporation. 10 µl of 5 wt% Nafion solution was further added to the coated surface and dried again slowly to evaporation. A Pt foil was used as a counter electrode and a Ag/AgCl/3M NaCl electrode was used as a reference electrode. For electrochemical assays, 1M H₂SO₄ and 1M CH₃OH solutions were used. Cyclic voltammetric measurements for specific activity and mass activity of each catalyst, as operated at 0.75 V, were carried out with a Model 263A electrochemical analyzer that is commercially available from Princeton Applied Research (PAR). The measurement results are shown in Table 1.

**Table 1**

| | Metal component | Support | Specific activity (at 0.75 V) (mA/cm²) | Mass activity (at 0.75 V) (mA/mg Pt) |
|---|---|---|---|---|
| Example 2 | 7.5% Pt | WC | 294 | 1373 |
| Example 3 | 3.5% Pt | WC | 185.1 | 1851 |
| Comparative Example 2 | 7.5% Pt | W₂C | 156 | 728 |
| Comparative Example 3 | 7.5% Pt | Carbon black | 114 | 307 |

As shown in Table 1, the nanoporous Pt-tungsten carbide catalysts prepared in Examples 2 and 3 are superior to the catalysts according to Comparative Examples 2 and 3 which do not have nanoporous structures, from the viewpoints of the specific activity and mass activity. This suggests that when the same amount of Pt supported to each of the catalysts prepared in Examples 2 and 3 and Comparative Examples 2 and 3, the catalysts prepared in Examples 2 and 3 demonstrate higher catalytic activity than the catalysts prepared in Comparative Examples 2 and 3. In addition, as confirmed in Examples 2 and 3, a drop of the catalytic activity is not sensitive to a reduction in the amount of Pt supported to the nanoporous tungsten carbide according to the present invention. Accordingly, the nanoporous catalyst according to the present invention can be used to fabricate a fuel cell having high catalytic activity with a small amount of a noble metal supported catalyst.

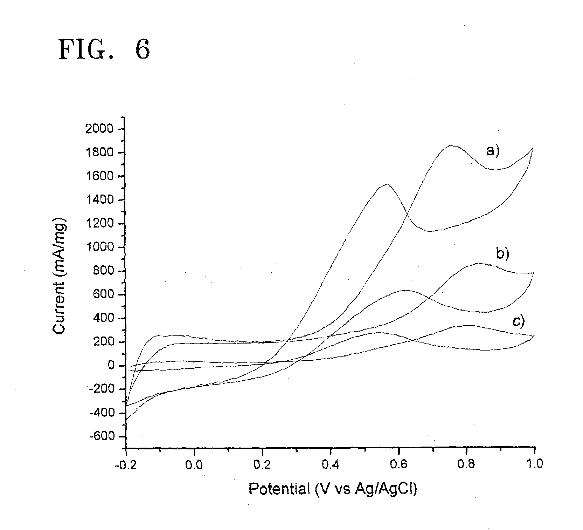

The catalysts prepared in Examples 2 and 3 and Comparative Examples 2 and 3 were subjected to continuous methanol oxidations in 1M H₂SO₄ and 1M CH₃OH solutions. After performing repeated tests of about 30 cycles, little change in a cyclic voltammogram obtained by cyclic voltammetry was found, by which it could be determined that oxygen atoms generated on a catalyst surface vanished at a transition area. Once having reached the highest level of the catalytic activity, a drop in the catalytic activity was not observed even after repeated tests of 100 cycles. As demonstrated by the dashed lines (a) in FIG. 6, the tungsten carbide catalyst prepared in Example 3 showed little difference between peak potentials, compared to the catalysts prepared in Comparative Examples 2 and 3, as demonstrated by the solid lines (b) and the dotted lines (c) of FIG. 6. This indicates that a catalyst containing tungsten carbide exhibits high resistance against poisoning from carbon monoxide (CO). The experimental results also showed that the peak potential in the methanol oxidation for the catalyst prepared in Example 2 shifted to a smaller level than the other catalysts, confirming that the electrochemical catalytic activity increased without using ruthenium (Ru) while having enhanced CO poison resistance. This is believed to be because a high surface area tungsten carbide catalyst directly takes part in the decomposition reaction of methanol to then activate water and generate a hydroxyl (-OH) group, which is presumably attributable to removal of CO poisoning.

As described above, according to the present invention, a nanoporous tungsten carbide catalyst or a catalyst supported with a metallic active component has high electrochemical activity and enhanced poison resistance to carbon monoxide (CO). Therefore, even after use for an extended period of time, the nanoporous tungsten carbide catalyst of the present invention can maintain a long-term high catalytic activity. In addition, since the nanoporous tungsten carbide catalyst of the present invention has small pore sizes and a large pore volume, which are advantageous for dispersing metallic active components, much higher catalytic activity can be demonstrated using only a slight amount of the metallic active component. Accordingly, an electrode for use in a fuel cell and a fuel cell employing the electrode can be fabricated in a cost-effective manner, compared to the prior art in which a considerable amount of expensive, precious metal catalysts are used.

While the present invention has been particularly shown and described with reference to exemplary embodiments thereof, it will be understood by those of ordinary skill in the art that various changes in form and details may be made therein without departing from the spirit and scope of the present invention as defined by the following claims.

## Claims

1. A nanoporous tungsten carbide catalyst comprising tungsten carbide crystalline particles and having nanopores of a mean pore diameter ranging from 2 nm to 5 nm and a nanopore volume of 0.08 to 0.25 cm³ per gram of the nanoporous tungsten carbide catalyst.

2. The nanoporous tungsten carbide catalyst of claim 1, wherein the tungsten carbide crystalline particles comprise tungsten, carbon and oxygen in an atomic ratio of 1:m:n, where 0.4≤m≤1, and 0≤n≤0.1.

3. The nanoporous tungsten carbide catalyst of claim 1, wherein the tungsten carbide crystalline particles are linked by carbon atoms.

4. The nanoporous tungsten carbide catalyst of claim 1, wherein the tungsten carbide crystalline particles contained in the nanoporous tungsten carbide catalyst have a mean diameter ranging from about 0.01 to 100 µm.

5. The nanoporous tungsten carbide catalyst of claim 1, further comprising an active metal component supported on a surface thereof.

6. The nanoporous tungsten carbide catalyst of claim 5, wherein the active metal component is at least one selected from the group consisting of platinum (Pt), ruthenium (Ru), osmium (Os), cobalt (Co), palladium (Pd), gallium (Ga), titanium (Ti), vanadium (V), chromium (Cr), manganese (Mn), iron (Fe), nickel (Ni), copper (Cu), zinc (Zn), aluminum (Al), and alloys comprising at least one of these materials.

7. A method of preparing a nanoporous tungsten carbide catalyst comprising:
(a) mixing a solution prepared by dissolving a polymerizable monomer and a tungsten precursor in a solvent with a solution of a surfactant;
(b) preparing a tungsten-polymer composite material having a polymer derived from the polymerizable monomer and the tungsten precursor through hydrothermal synthesis; and
(c) calcinating the tungsten-polymer composite material to produce nanoporous tungsten carbide particles.

8. The method of claim 7, wherein the polymerizable monomer in step (a) is at least one selected from the group consisting of resorcinol/formaldehyde, phenol/formaldehyde, pyrrole, thiophene, acronate, and vinyl chloride.

9. The method of claim 7, wherein the tungsten precursor in step (a) is a tungstate.

10. The method of claim 9, wherein the tungstate is at least one selected from the group consisting of ammonium meta tungstate, ammonium tungstate, sodium tungstate, tungsten chloride, and mixtures thereof.

11. The method of claim 7, wherein the solvent in step (a) is water or an alcoholic solvent.

12. The method of claim 11, wherein the alcoholic solvent is at least one selected from the group consisting of methanol, ethanol, propanol, butanol, and pentanol.

13. The method of claim 7, wherein the surfactant is at least one selected from the group consisting of a cationic surfactant, an anionic surfactant, and a nonionic surfactant.

14. The method of claim 7, wherein the molar ratio of the tungsten precursor to the monomer in step (a) is in the range of about 1:2 to 1:200, the molar ratio of the tungsten precursor to the solvent in step (a) is in the range of about 1:500 to 1:3000, and the molar ratio of the tungsten precursor to the surfactant in step (a) is in the range of about 1:0.5 to 1:3.

15. The method of claim 7, wherein the hydrothermal synthesis in step (b) is performed at a temperature of about 100 to 300 °C for a time in the range of about 10 to 36 hours.

16. The method of claim 7, wherein a polymerization initiator is further used in step (b).

17. The method of claim 16, wherein the polymerization initiator is at least one selected form the group consisting of sodium persulfate, potassium persulfate, and iron chloride.

18. The method of claim 7, wherein the calcinating in step (c) is performed at a temperature of about 500 to 1400°C.

19. The method of claim 7, further comprising impregnating a metal active component on a surface of the particles produced in step (c).

20. An electrode of a fuel cell comprising the nanoporous tungsten carbide of any one of claims 1 through 6.

21. A fuel cell including a cathode having a catalyst layer and a diffusion layer, an anode having a catalyst layer and a diffusion layer, and an electrolyte layer disposed between the cathode and the anode, wherein at least one of the cathode and the anode comprises the nanoporous tungsten carbide catalyst of any one of claims 1 through 6.
